# EUROPEAN PATENT SPECIFICATION

(11) **EP 3 705 355 B1**
(45) Date of publication and mention of the grant of the patent: **06.03.2024**
(21) Application number: 18872169.0
(22) Date of filing: 31.01.2018
(51) Int. Cl.: B60S 5/06, B60L 53/35, B60L 53/80, B66F 7/28

(54) **RESTORING MECHANISM FOR FLOATING BATTERY SWAP DEVICE, FLOATING BATTERY SWAP DEVICE, AND BATTERY SWAP METHOD**
RÜCKSTELLMECHANISMUS FÜR EINE SCHWEBENDE BATTERIEWECHSELVORRICHTUNG, SCHWEBENDE BATTERIEWECHSELVORRICHTUNG, UND BATTERIEWECHSELVERFAHREN
MÉCANISME DE RÉTABLISSEMENT POUR DISPOSITIF D'ÉCHANGE DE BATTERIE FLOTTANT, DISPOSITIF FLOTTANT D'ÉCHANGE DE BATTERIE, ET PROCÉDÉ D'ÉCHANGE DE BATTERIE

(30) Priority: 02.11.2017 CN 201711064655
(43) Date of publication of application: 09.09.2020
(73) Proprietor: NIO (Anhui) Holding Co., Ltd., Hefei City, Anhui Province (CN)
(72) Inventor: ZHOU, Xiaohong, Anting, Jiading Shanghai (CN)
(74) Representative: Vossius & Partner Patentanwälte Rechtsanwälte mbB
(86) International application number: PCT/CN2018/074820
(87) International publication number: WO 2019/085306

(56) References cited:
- CN-A- 102 991 475
- CN-A- 106 926 825
- CN-U- 203 036 208
- CN-U- 203 144 039
- CN-U- 203 495 591
- CN-U- 203 495 591
- CN-U- 205 022 558
- CN-U- 206 231 369
- GB-A- 2 541 728

## Description

### Technical Field

The invention relates to the field of battery charging and swapping, and in particular to a restoring mechanism for a floating battery swap device, a floating battery swap device, and a battery swap method.

### Background Art

With the popularization of new energy automobiles, how to effectively provide rapid and effective energy supply for vehicles with insufficient energy has become a concerned problem for manufacturers and vehicle owners. Taking electric vehicles as an example, the current mainstream electric energy supply solutions include a charging solution and a battery replacement solution. Compared with the charging solution, the battery replacement solution can replace a traction battery in a very short time and does not significantly affect the service life of the traction battery, and is therefore one of the main development directions of electric energy supply. The battery replacement solution is generally completed in a battery charging and swapping station. The battery charging and swapping station is equipped with a battery compartment for storing batteries, a battery swap platform, and a battery swap robot, such as a rail guided vehicle (RGV), for carrying fresh/used traction batteries, between the battery compartment and the battery swap platform. The battery swap robot completes the action of replacing a traction battery for an electric vehicle parked on a battery swap platform by reciprocating on a track previously laid between the battery compartment and the battery swap platform.

During a battery swap, the positioning between the battery swap robot and the vehicle with a battery to be swapped is one of the key steps to achieve the battery replacement solution, and the success rate and accuracy of the positioning directly affect the success rate of battery swapping and the reliability and service life of batteries. In order to reduce the positioning error and increase the positioning success rate, in the prior art, the battery swap robot is generally provided with a floating platform that can be restored automatically. For example, the invention patent application publication No. CN 106926825 A discloses a floating alignment device and method for a battery swap apparatus. The floating alignment device mainly comprises a floating portion, at least one positioning mechanism fixedly connected to the floating portion, a fixed plate, and a restoring mechanism. The floating portion comprises a plurality of floating bullseyes arranged on the fixed plate, and a floating plate arranged on the plurality of floating bullseyes in a free-contact manner, and the floating plate can float in a horizontal plane under the restriction of the plurality of floating bullseyes. The restoring mechanism comprises at least one spring. The spring is arranged between the fixed plate and the floating plate, and in the case where an external force is removed, the floating plate can be restored to an initial position determined by a pretension force of the spring. The utility model CN 203 144 039 U discloses a floating platform capable of automatically resetting and belongs to the technical field of auxiliary devices for equipment assembly and disassembly. The floating platform capable of automatically resetting comprises a floating tabletop, an installation plane, a floating supporting device and a floating resetting device. The floating tabletop is installed on the installation plane through the floating supporting device and the floating resetting device. It can be seen that, in the application described above, the restoration of the floating alignment device is achieved by means of the spring connected between the fixed plate and the floating plate. Although such configuration has a certain restoration effect, during the actual alignment between the floating alignment device and a vehicle with a battery to be swapped, since the deviation between the vehicle with a battery to be swapped and the floating alignment device is multidirectional, the floating plate usually generates irregular torsion and offset along a floating surface. Such torsion and offset greatly increase the possibility of failure caused by the spring generating a non-axial force and in turn easily causes the problems such as a poor floating effect of the floating alignment device, which not only reduces the battery swap efficiency and increases the failure rate of apparatus, but also easily damages the battery and the vehicle body during the alignment operation when the floating effect is poor, thereby affecting the customer's battery swap experience.

Accordingly, a new restoring mechanism is needed in the art to solve the above problems.

### Summary of the Invention

In order to solve the above problems in the prior art, that is, for the solution of the existing floating alignment devices in which a spring is used as a restoring mechanism, to solve the problems that the spring is easy to fail and the floating alignment device has a poor floating effect, the invention provides a restoring mechanism for a floating battery swap device according to the appended claims.

In a preferred technical solution of the above restoring mechanism for a floating battery swap device, the rolling member is a universal ball, the second end of the guide rod is provided with a counterbore, and the universal ball is embedded in the counterbore.

In a preferred technical solution of the above restoring mechanism for a floating battery swap device, the guide sleeve is provided with a mounting base, and the guide sleeve is fixedly connected to the fixed portion by means of the mounting base.

In a preferred technical solution of the above restoring mechanism for a floating battery swap device, a limiting structure is provided at the first opening, the second end of the guide rod is provided with a diameter-variable structure in a circumferential direction, a circumferential outer edge of the diameter-variable structure matches an inner wall of the cavity, and the limiting structure is configured to be able to limit the movement of the guide rod by means of axially abutting against the diameter-variable structure.

In a preferred technical solution of the above restoring mechanism for a floating battery swap device, the restoring mechanism further comprises an adjustment member, and the adjustment member is configured to be able to adjust a pretension force of the elastic member.

In a preferred technical solution of the above restoring mechanism for a floating battery swap device, the adjustment member comprises an adjustment bolt and a pressing block, a second end of the guide sleeve is further provided with a second opening, the pressing block abuts against a second end of the elastic member, and a stud end of the adjustment bolt is sequentially screwed to the second opening and the pressing block.

In a preferred technical solution of the above restoring mechanism for a floating battery swap device, the elastic member is a compression spring, a belleville spring, or an elastic rubber block.

The invention further provides a floating battery swap device, which comprises a fixed portion and a floating portion, the floating portion being able to float relative to the fixed portion, the floating portion being provided with at least one positioning member, and the positioning member being able to dock with an engagement member of a vehicle with a battery to be swapped by means of floating of the floating portion. The floating battery swap device further comprises a restoring mechanism used for adjusting the position of the floating portion, and the restoring mechanism is the restoring mechanism for a floating battery swap device according to any one of the solutions described above.

In a preferred technical solution of the above floating battery swap device, there are a plurality of restoring mechanisms, wherein some of the plurality of restoring mechanisms are arranged at the fixed portion or the floating portion in a first direction, and the other of the plurality of restoring mechanisms are arranged at the fixed portion or the floating portion in a second direction.

In a preferred technical solution of the above floating battery swap device, the floating portion comprises a floating plate that is able to float relative to the fixed portion and a floating platform that is fixedly connected to the floating plate, a guide sleeve of the restoring mechanism is fixedly connected to the fixed portion, and a guide rod of the restoring mechanism abuts against the floating plate.

The invention further provides a battery swap method using the floating battery swap device according to any one of the solutions described above for battery swapping, the battery swap method comprising:
docking the positioning member with an engagement member of a vehicle with a battery to be swapped;
floating the floating portion during the docking between the positioning member and the engagement member;
enabling the floating portion to remove a used battery of the vehicle with a battery to be swapped or install a fresh battery for the vehicle with a battery to be swapped;
disengaging the positioning member from the engagement member; and
restoring the floating portion during the disengagement of the positioning member from the engagement member,
wherein the action of restoring the floating portion is completed by the restoring mechanism.

It would have been understood by those skilled in the art that, in the preferred technical solutions of the invention, the restoring mechanism for a floating battery swap device comprises a guide sleeve, a guide rod, and an elastic member. The guide sleeve is connected to one of the floating portion and the fixed portion of the floating battery swap device, and has a cavity and a first opening located at a first end. A first end of the guide rod slidably extends into cavity from first opening, and a second end of the guide rod abuts against the other of the fixed portion and the floating portion. The elastic member is arranged in the cavity, with a first end thereof being connected to the first end of the guide rod. By means of providing the guide rod and the guide sleeve, when the floating portion is floating relative to the fixed portion, the guide rod can slide relative to floating portion to counteract the non-axial force received by the restoring mechanism. That is, the guide rod does not generate torsion and offset relative to guide sleeve along with the floating portion, but only transfers the axial force received by the restoring mechanism to the elastic member by means of the sliding of the guide rod in the guide sleeve, such that the elastic member only moves axially, which in turn improves the operation stability and service life of the elastic member and avoids the case where the restoring mechanism has a poor floating effect and is prone to damage due to the failure of the elastic member, etc.

Further, by means of providing a floating member at the second end of the guide rod, the guide rod slides more smoothly relative to the floating portion; and by means of providing an adjustment member, the pretension force of the elastic member can be adjusted, which further extends the service life of the restoring mechanism and enhances the floating effect of the floating battery swap device.

### Brief Description of the Drawings

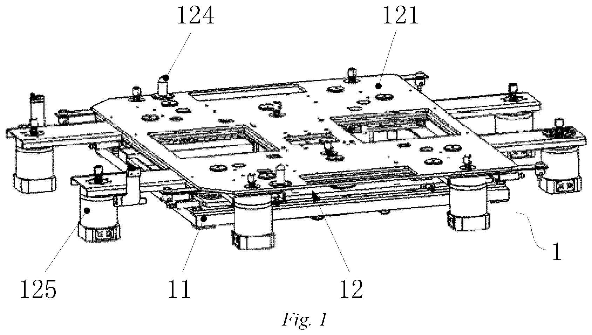

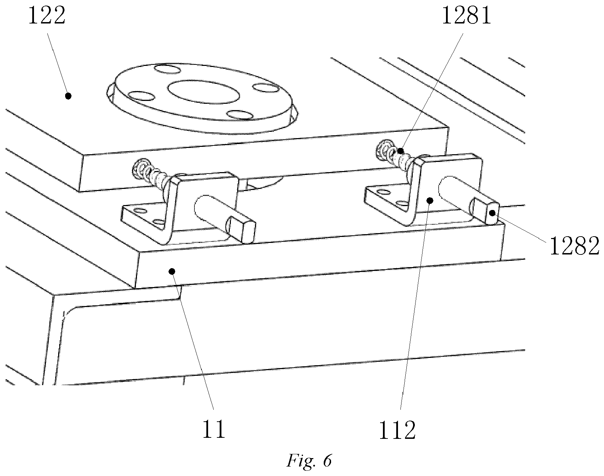

The restoring mechanism for a floating battery swap device, the floating battery swap device, and the battery swap method of the invention will be described below with reference to the accompanying drawings and in conjunction with a battery swap robot of a rail guided type. The figures 1-5 are exemplary drawings which are useful for understanding the invention, while figures 6-10 are embodiments according to the invention.
Fig. 1 is a schematic structural view of a floating battery swap device;
Fig. 2 is a schematic front view of the floating battery swap device;
Fig. 3 is a schematic structural view of the floating battery swap device;
Fig. 4 is a partial enlarged view of position A in Fig. 2;
Fig. 5 is a sectional view of position B-B in Fig. 3, showing a schematic view of a first mounting position of a restoring mechanism;
Fig. 6 is a partial enlarged view of position C in Fig. 3, showing a schematic view of a second mounting position of the restoring mechanism;
Fig. 7 is a schematic view of an improved structure of the restoring mechanism according to the invention;
Fig. 8 is a schematic view of a mounting position of the restoring mechanism in Fig. 7;
Fig. 9 is a schematic bottom view of the floating battery swap device according to the invention;
Fig. 10 is a flow chart of a battery swap method of the floating battery swap device according to the invention.

### List of reference numerals:

1. Floating battery swap device; 11. Fixed portion; 111. Cylindrical bracket; 112. L-shaped bracket; 12. Floating portion; 121. Floating platform; 122. Floating plate; 123. Support member; 124. Positioning member; 125. Locking/unlocking mechanism; 126. First limiting member; 127. Second limiting member; 128. Restoring mechanism; 1281. Elastic member; 1282. Adjustment member; 1283. Guide sleeve; 1284. Guide rod; 1285. Mounting base; 1286. Pressing block; 1287. Rolling member.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention. For example, although the number of the restoring mechanisms in the drawings is eight, the numerical relationship is not inalterable and can be modified by those skilled in the art according to requirements so as to adapt to a specific scenario.

It should be noted that in the description of the invention, the terms, such as "center", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that in the description of the invention, the terms "install", "interface" and "connect" are to be understood in a broad sense, for example, it can be a fixed connection, detachable connection, or integral connection; a mechanical connection or electrical connection; a direct connection or indirect connection through an intermediate medium, and internal communication between two elements, unless expressly specified and defined otherwise. For those skilled in the art, the specific meaning of the above terms in the invention can be interpreted according to the specific situation.

As shown in Fig. 1 to Fig. 3, the floating battery swap device 1 mainly comprises a fixed portion 11, such as a fixed bracket made of angle steel by welding, and a floating portion 12. The floating portion 12 can float within a set range relative to the fixed portion 11, and is provided with at least one positioning member 124. The positioning member 124 can dock with an engagement member of a vehicle with a battery to be swapped by means of floating of the floating portion 12. For example, when a used battery is removed, the positioning member 124, such as a positioning pin, located on the floating portion 12 is insert-fitted to the engagement member, such as a positioning hole in an automobile chassis or in a traction battery, of the vehicle with a battery to be swapped by means of floating of the floating portion 12 relative to the fixed bracket.

With further reference to Fig. 1 to Fig. 3, specifically, the floating portion 12 comprises a floating platform 121 and a plurality of floating plates 122, and the floating platform 121 is fixedly connected to each of the floating plates 122 by means of a plurality of support members 123. The floating platform 121 is fixedly connected to at least one positioning member 124 and at least one locking/unlocking mechanism 125, the positioning member 124 being used to dock with a vehicle with a battery to be swapped, and the locking/unlocking mechanism 125 being used to lock/unlock a traction battery. With reference to Fig. 1 to Fig. 3, in a possible embodiment, the floating portion 12 comprises two floating plates 122, the floating platform 121 is connected to each of the floating plates 122 by means of eight support members 123, the floating platform 121 is provided with two positioning pins (the vehicle with a battery to be swapped is provided with two corresponding positioning holes) and ten locking/unlocking mechanisms 125, and the locking/unlocking mechanism 125 may further comprise a servo motor and a locking/unlocking head (such as an inner-hexagon lock head) arranged on an output shaft of the servo motor.

Obviously, the above configuration is not the only way, and could be adjusted by those skilled in the art, as long as the adjustment enables the floating battery swap device 1 to successfully dock with the vehicle with a battery to be swapped and lock/unlock the traction battery. For example, the number of the floating plates 122 may be one or four, the positioning member 124 may also be a positioning hole (the corresponding automobile chassis or traction battery is provided with a positioning pin), and the floating platform 121 is welded or integrally formed with the floating plates 122.

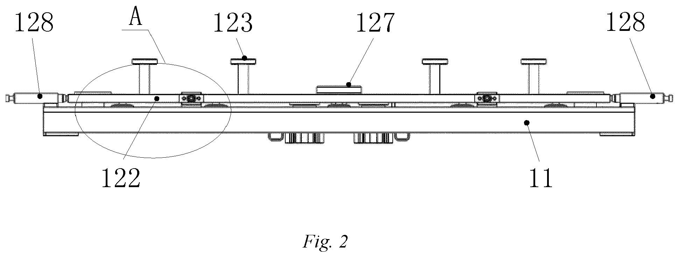

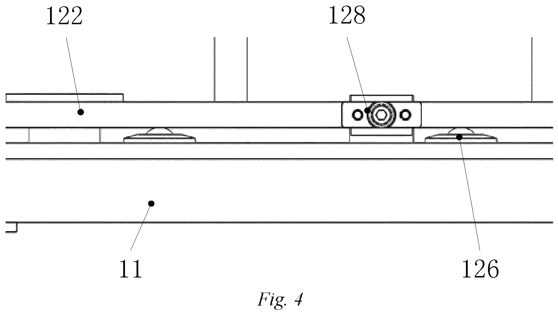

Hereinafter, reference is made to Figs. 2, 3 and 4, in which Fig. 4 is a partial enlarged view of position A in Fig. 2. As shown in Fig. 2 to Fig. 4, in the two floating plates 122, each floating plate 122 floats relative to the fixed portion 11 by means of a plurality of first limiting members 126 and at least one second limiting member 127, in which the first limiting member 126 is arranged to allow the floating plate 122 to float in a horizontal plane, and the second limiting member 127 is arranged to enable the floating plate 122 and the fixed portion 11 to have no relative movement therebetween in a vertical direction. With reference to Figs. 2 and 4, preferably, the first limiting member 126 is a bullseye bearing with a base thereof being fixedly connected to the fixed portion 11, a ball faces the floating plate 122, and a bottom surface of the floating plate 122 abuts against the bullseye bearing. The second limiting member 127 is a plate bolt, the floating plate 122 is provided with a limiting hole that can accommodate a stud portion of the bolt (it is not shown in the figure that the hole diameter of the limiting hole is greater than the diameter of the stud such that the floating plate 122 can float freely), the stud passes through the limiting hole and is screwed to the fixed portion 11, and after screwing, the underside of a nut abuts against a top surface of the floating plate 122.

It would have been understood by those skilled in the art that the specific forms, the arrangement positions and the numbers of the first limiting member 126 and the second limiting member 127 are not inalterable, and could be adjusted in any form by those skilled in the art when the above limiting conditions are met, so as to adapt to more specific application scenarios. For example, the first limiting member 126 may also be a member, such as a universal wheel, by which the floating plate 122 can float freely, and the base of the first limiting member 126 may also be fixedly connected to the floating plate 122. The second limiting member 127 may also be a member, such as a rivet, by which the floating plate 122 can have no relative movement relative to the fixed portion 11 in a vertical direction, and may also be an L-shaped steel part arranged around the floating plate 122, with a vertical portion of the L-shaped steel part being fixedly connected to the fixed portion 11, and a transverse portion of the L-shaped steel part facing the floating plate 122 and abutting against the top surface of the floating plate 122, thereby limiting the movement of the floating plate 122 in the vertical direction.

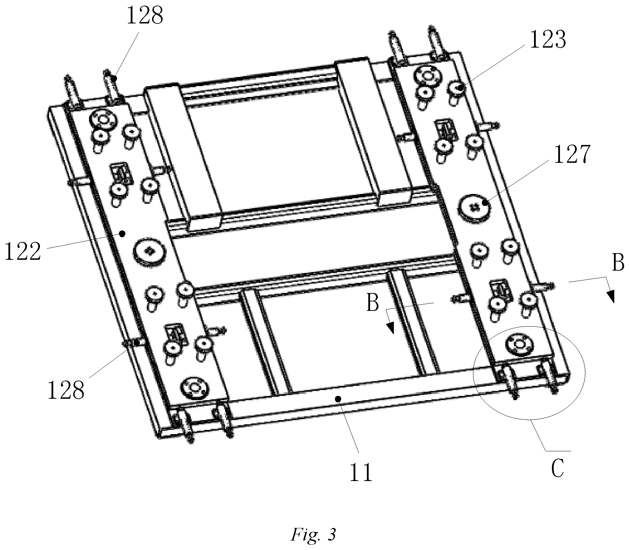

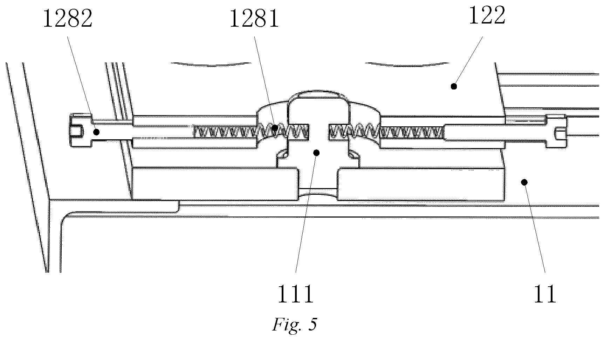

Hereinafter, reference is made to Figs. 3, 5 and 6, in which Fig. 5 is a sectional view of position B-B in Fig. 3, and Fig. 6 is a partial enlarged view of position C in Fig. 3. As shown in Figs. 3, 5 and 6, in order to implement the automatic restoration of the floating battery swap device 1 and, for the solution of the existing floating alignment devices in which a spring is used as a restoring mechanism, to solve the problems that the spring is easy to fail and the floating alignment device has a poor floating effect, in a possible embodiment, each floating plate 122 is provided with a plurality of restoring mechanisms 128 used to enable the floating plate 122 to restore automatically after floating. Preferably, the restoring mechanism 128 comprises an elastic member 1281 and an adjustment member 1282. The elastic member 1281 is arranged between the fixed portion 11 and the floating plate 122, and the adjustment member 1282 is used to adjust the pretension force of the elastic member 1281. Preferably, the elastic member 1281 is a compression spring, the adjustment member 1282 is a fastening screw, and the compression spring is sheathed over the fastening screw. With reference to Fig. 3, each floating plate 122 is provided with eight restoring mechanisms 128, each side surface being provided with two restoring mechanisms, and each restoring mechanism 128 is arranged perpendicular to the side surface of the floating plate 122. With reference to Figs. 5 and 6, the side surface of the floating plate 122 is provided with a connecting hole or a counterbore, and the fixed portion 11 is provided with a cylindrical bracket 111 and an L-shaped bracket 112 respectively corresponding to the connecting hole and the counterbore. Some compression springs of the restoring mechanism 128 have one end thereof extending into the cylindrical bracket 111 through the connecting hole, and the other end thereof being fastened in the connecting hole by means of the fastening screw; and the other compression springs of the restoring mechanism 128 have one end thereof partially or completely extending into the counterbore, and the other end thereof being connected to the L-shaped bracket 112 by means of the fastening screw.

During floating of the floating plate 122, due to the different production batches and qualities of the compression springs, each compression spring will generate a different amount of elastic force, which easily leads to a poor floating effect of the floating battery swap device 1. In this case, the pretension force of the compression spring can be adjusted by means of adjusting the fastening screw, so as to change the elastic force of the compression spring and further improve the floating effect of the floating battery swap device 1. Moreover, since the compression spring extends into the connecting hole or the counterbore, during generation of the elastic force by the compression spring, the connecting hole and the counterbore may also have a certain effect in limiting the deformation of the compression spring under force, such that the force applied to the compression spring in the connecting hole or in the counterbore is mainly an axial force, thereby extending the service life of the compression spring. That is to say, providing the restoring mechanism 128 solves, for the solution of the existing floating alignment devices in which a spring is used as a restoring mechanism, the problems that the spring is easy to fail and the floating alignment device has a poor floating effect.

Of course, the arrangement and the number of the restoring mechanism 128 described above only represent a specific embodiment, and any change in form or number made to the restoring mechanism 128 by those skilled in the art without departing from the principle of the invention will fall within the scope of protection of the invention. For example, the elastic member 1281 may also be a belleville spring, and the number thereof may also be increased or reduced based on the actual application scenario, and the compression spring may also abut against the end of the fastening screw or extend into the counterbore provided at the end of the fastening screw.

### Embodiment According to the Invention

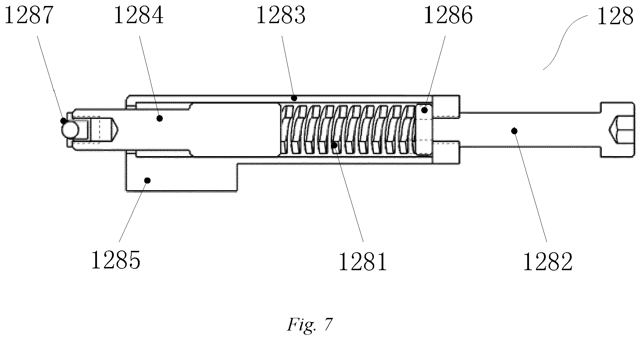

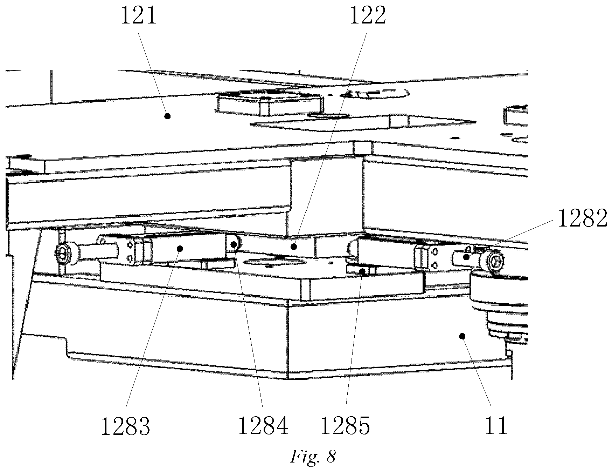

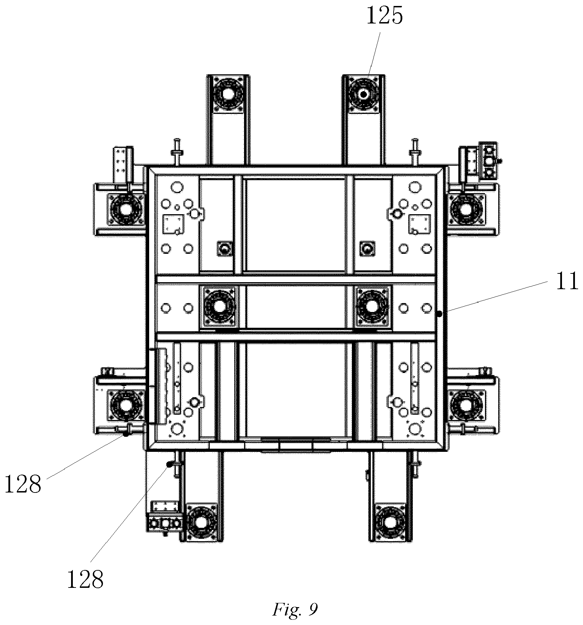

Hereinafter, reference is made to Figs. 7, 8 and 9, Fig. 7 is a schematic view of an improved structure of the restoring mechanism 128 according to the invention, Fig. 8 is a schematic view of a mounting position of the restoring mechanism 128 in Fig. 7, and Fig. 9 is a schematic bottom view of a floating battery swap device according to the invention. As shown in Figs. 7 and 8, as an improvement of the restoring mechanism 128 in Embodiment 1, in addition to the elastic member 1281 and the adjustment member 1282, the restoring mechanism 128 further comprises a guide sleeve 1283 and a guide rod 1284. The guide sleeve 1283 is provided with a mounting base 1285, and the guide sleeve 1283 is fixedly connected to the fixed portion 11 in a screwed manner by means of the mounting base 1285. The guide sleeve 1283 further comprises a cavity, a first opening located at a first end (a left end of the guide sleeve 1283 in Fig. 7), and a second opening located at a second end (a right end of the guide sleeve 1283 in Fig. 7). The first end of the guide rod 1284 (a right end of the guide rod 1284 in Fig. 7) slidably extends into the cavity from the first opening, and the adjustment member 1282 adjustably extends into the cavity from the second opening. The second end of the guide rod 1284 (a left end of the guide rod 1284 in Fig. 7) preferably abuts against the side surface of the floating plate 122, that is, can slide freely relative to the floating plate 122. The elastic member 1281 is preferably still a compression spring. The compression spring is located in the cavity, a first end of the compression spring (a left end of the compression spring in Fig. 7) is connected to the first end of the guide rod 1284, and a second end of the compression spring (a right end of the compression spring in Fig. 7) abuts against an extending end of the adjustment member 1282. For example, the adjustment member 1282 is still a fastening screw, a stud end thereof is provided with a pressing block 1286, the stud end is sequentially screwed to the second opening and the pressing block 1286, and the second end of the compression spring abuts against the pressing block 1286. It should be noted here that the arrangement positions of the guide sleeve 1283 and the guide rod 1284 can be exchanged, that is, the guide sleeve 1283 is arranged at the floating plate 122, and the guide rod 1284 abuts against the fixed portion 11. Furthermore, the elastic member 1281 may also be a belleville spring, a spring rubber block, etc., the adjustment member 1282 does not only have one form, and any other adjustment member 1282 that can adjust the pretension force of the spring should fall within the scope of protection of the invention.

It can be seen from the above description that, by means of providing the guide rod 1284 and the guide sleeve 1283, when the floating plate 122 is floating relative to the fixed portion 11, the guide rod 1284 can slide relative to the floating plate 122 to counteract the non-axial force received by the restoring mechanism 128. That is, the guide rod 1284 does not generate torsion and offset relative to the guide sleeve 1283 along with the floating plate 122, but only transfers the axial force, which is generated by the restoring mechanism 128 due to the torsion and offset of the floating plate 122, to the elastic member 1281 by means of the sliding of the guide rod 1284 in the guide sleeve 1283, such that the elastic member 1281 only moves axially, which in turn improves the operation stability and service life of the elastic member 1281 and avoids the case where the restoring mechanism 128 has a poor floating effect and is prone to damage due to the failure of the elastic member 1281, etc.

With continued reference to Fig. 7, in order to enable the guide rod 1284 to slide more smoothly relative to the floating plate 122, in a more preferred embodiment, the second end of the guide rod 1284 may also be provided with a rolling member 1287 that can roll freely relative to the floating plate 122, and the guide rod 1284 abuts against the floating plate 122 by means of the rolling member 1287. For example, the rolling member 1287 may be a universal ball, and the second end of the guide rod 1284 is correspondingly provided with a counterbore in which the universal ball is embedded. As another example, the rolling member 1287 may also be a member, such as a universal wheel, that can reduce the sliding friction between the guide rod 1284 and the floating plate 122.

With further reference to Fig. 7, in order to better implement sliding of the guide rod 1284 in the guide sleeve 1283 to ensure the axial force applied to the compression spring, a limiting structure may be further provided at the first opening of the guide sleeve 1283, the second end of the guide rod 1284 is correspondingly provided with a diameter-variable structure in a circumferential direction, a circumferential outer edge of the diameter-variable structure matches an inner wall of the cavity, and the limiting structure is configured to be able to limit the movement of the guide rod 1284 by means of axially abutting against the diameter-variable structure. With reference to Fig. 7, for example, a flange or a limiting block is provided at the first opening of the guide sleeve 1283 along the circumferential direction, the second end of the guide rod 1284 is correspondingly provided with an annular boss or a plurality of arc-shaped bosses in the circumferential direction, and by means of the flange or the limiting block abutting against the annular boss or the arc-shaped bosses during the movement of the guide rod 1284, the travel of the guide rod 1284 can be limited to further limit the range of the elastic force of the spring. By means of an outer edge of the annular boss or the arc-shaped bosses matching an inner wall of the guide sleeve 1283, the moving coaxiality of the guide rod 1284 is limited to further ensure the axial force applied to the spring.

With reference to Fig. 9, each floating plate 122 is provided with eight restoring mechanisms 128, each vertical corner of the fixed portion 11 being provided with two restoring mechanisms, four of the restoring mechanisms 128 being arranged in a first direction, and the other four restoring mechanisms 128 being arranged in a second direction. According to the orientation shown in Fig. 9, the first direction is a vertical direction, and the second direction is a horizontal direction. With reference to Figs. 8 and 9, the guide sleeve 1283 is fixedly connected to the fixed portion 11 by means of the mounting base 1285, and the guide rod 1284 abuts against the side surface of the floating plate 122 by means of a universal ball. In this way, when the floating plate 122 is floated by an external force, the universal ball rolls relative to the floating plate 122 to counteract the non-axial force applied to the restoring mechanism 128, and the axial force applied to the restoring mechanism 128 is transferred to the compression spring by means of the sliding of the guide rod 1284 relative to the guide sleeve 1283 so as to generate an elastic force. When the external force is removed, the compression spring releases the elastic force and pushes the floating plate 122 by means of the guide rod 1284 so as to restore the floating plate 122.

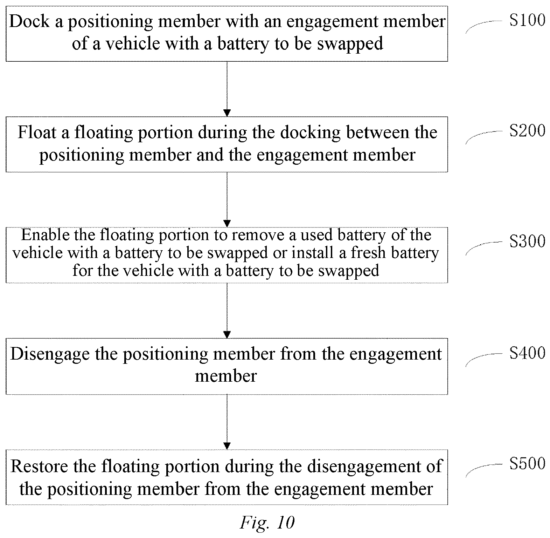

Reference is made to Fig. 10. Fig. 10 is a flow chart of a battery swap method of the floating battery swap device according to the invention. As shown in Fig. 10, the invention further provides a battery swap method using the floating battery swap device 1 described above for battery swapping, the method mainly comprising the following steps:
S 100, docking a positioning member 124 with an engagement member of a vehicle with a battery to be swapped;
S200, floating a floating portion during the docking between the positioning member 124 and the engagement member;
S300, enabling the floating portion to remove a used battery of the vehicle with a battery to be swapped or install a fresh battery for the vehicle with a battery to be swapped;
S400, disengaging the positioning member 124 from the engagement member; and
S500, restoring the floating portion during the disengagement of the positioning member 124 from the engagement member.

The action of restoring the floating portion is completed by a restoring mechanism 128.

With reference to Figs. 1, 7 and 10, as a possible embodiment, a complete battery swap process of a battery swap robot of a rail guided type (hereinafter referred to as the battery swap robot) using the floating battery swap device 1 of the invention may be as follows:
a vehicle with a battery to be swapped reaches a parking platform of a battery charging and swapping station, and completes coarse positioning and hoisting → a battery swap robot reaches a projection position of the vehicle with a battery to be swapped, and completes precise positioning in the vertical direction with the vehicle with a battery to be swapped → a floating battery swap device 1 is hoisted by the battery swap robot, such that a positioning pin is fitted and inserted into a positioning hole of a used battery, and a floating plate 122 floats → the used battery is removed by a locking/unlocking mechanism 125 → the floating battery swap device 1 is lowered by the battery swap robot, and the floating plate 122 is restored by the restoring mechanism 128, so as to complete the removal of the used battery → the battery swap robot leaves a battery swap position and reaches a battery rack, the used battery is replaced with a fresh battery, and the positioning pin is inserted and positioned in a positioning hole of the fresh battery → the battery swap robot reaches the projection position of the vehicle with a battery to be swapped again, and completes the precise positioning with the vehicle with a battery to be swapped → the floating battery swap device 1 is hoisted by the battery swap robot again, such that the fresh battery is inserted into a mounting position of the vehicle with a battery to be swapped, and the floating plate 122 floats again → the fresh battery is fastened by the locking/unlocking mechanism 125 → the floating battery swap device 1 is lowered by the battery swap robot, and the floating plate 122 is automatically restored by the restoring mechanism 128 → the battery swap robot returns to an initial position, and the battery swapping is completed.

Finally, it should be noted that although this embodiment is described with reference to a battery swap robot of a rail guided type, it is obvious that the invention can be applied to other apparatuses having the floating battery swap device 1, such as a battery swap robot of an automatically guided type.

Heretofore, the technical solutions of the invention have been described with reference to the preferred embodiments shown in the accompanying drawings; however, those skilled in the art can readily understand that the scope of protection of the invention is obviously not limited to these particular embodiments.

## Claims

1. A restoring mechanism (128) for a floating battery swap device, the floating battery swap device comprising a fixed portion (11) and a floating portion (12), and the floating portion (12) being able to float relative to the fixed portion (11), **characterized in that** the restoring mechanism (128) comprises:
a guide sleeve (1283), the guide sleeve (1283) being fixedly connected to one of the floating portion (12) and the fixed portion (11), and the guide sleeve (1283) having a cavity and a first opening located at a first end thereof;
a guide rod (1284), with a first end of the guide rod (1284) slidably extending into the cavity from the first opening, and a second end of the guide rod (1284) abutting against the other of the fixed portion (11) and the floating portion (12); and
an elastic member (1281) arranged in the cavity, with a first end of the elastic member (1281) being connected to the first end of the guide rod (1284);
the second end of the guide rod (1284) is provided with a rolling member (1287) that is able to freely roll relative to the fixed portion (11) or the floating portion (12), and the guide rod (1284) abuts against the fixed portion (11) or the floating portion (12) by means of the rolling member (1287).

2. The restoring mechanism for a floating battery swap device according to claim 1, **characterized in that** the rolling member (1287) is a universal ball, the second end of the guide rod (1284) is provided with a counterbore, and the universal ball is embedded in the counterbore.

3. The restoring mechanism for a floating battery swap device according to claim 2, **characterized in that** the guide sleeve (1283) is provided with a mounting base (1285), and the guide sleeve (1283) is fixedly connected to the fixed portion (11) by means of the mounting base (1285).

4. The restoring mechanism for a floating battery swap device according to claim 3, **characterized in that** a limiting structure is provided at the first opening, the second end of the guide rod (1284) is provided with a diameter-variable structure in a circumferential direction,
wherein the diameter-variable structure comprises a first section and a second section,
wherein the first section that is configured to go through the first opening has a smaller diameter than the second section, and
a circumferential outer edge of the second section of the diameter-variable structure matches an inner wall of the cavity, and the limiting structure is configured to be able to limit the movement of the guide rod (1284) by means of axially abutting against the the second section of diameter-variable structure.

5. The restoring mechanism for a floating battery swap device according to any one of claims 1 to 4, **characterized in that** the restoring mechanism (128) further comprises an adjustment member (1282), and the adjustment member (1282) is configured to be able to adjust a pretension force of the elastic member (1281).

6. The restoring mechanism for a floating battery swap device according to claim 5, **characterized in that** the adjustment member (1282) comprises an adjustment bolt and a pressing block (1286), a second end of the guide sleeve (1283) is further provided with a second opening, the pressing block (1286) abuts against a second end of the elastic member (1281), and a stud end of the adjustment bolt is sequentially screwed to the second opening and the pressing block (1286).

7. The restoring mechanism for a floating battery swap device according to claim 1, **characterized in that** the elastic member (1281) is a compression spring, a belleville spring, or an elastic rubber block.

8. A floating battery swap device, comprising a fixed portion (11) and a floating portion (12), the floating portion (12) being able to float relative to the fixed portion (11), the floating portion (12) being provided with at least one positioning member (124), and the positioning member (124) being able to dock with an engagement member of a vehicle with a battery to be swapped by means of floating of the floating portion (12);
**characterized in that** the floating battery swap device further comprises a restoring mechanism used for adjusting the position of the floating portion (12), and the restoring mechanism is the restoring mechanism (128) for a floating battery swap device according to any one of claims 1 to 7.

9. The floating battery swap device according to claim 8, **characterized in that** there are a plurality of restoring mechanisms (128), wherein some of the plurality of restoring mechanisms (128) are arranged at the fixed portion (11) or the floating portion (12) in a first direction, and the other of the plurality of restoring mechanisms (128) are arranged at the fixed portion (11) or the floating portion (12) in a second direction.

10. The floating battery swap device according to claim 9, **characterized in that** the floating portion (12) comprises a floating plate (122) that is able to float relative to the fixed portion (11) and a floating platform (121) that is fixedly connected to the floating plate (122), a guide sleeve (1283) of the restoring mechanism (128) is fixedly connected to the fixed portion (11), and a guide rod (1284) of the restoring mechanism (128) abuts against the floating plate (122).

11. A battery swap method using the floating battery swap device according to any one of claims 8 to 10 for battery swapping, **characterized in that** the battery swap method comprises:
docking the positioning member (124) with an engagement member of a vehicle with a battery to be swapped;
floating the floating portion (12) during the docking between the positioning member (124) and the engagement member;
enabling the floating portion (12) to remove a used battery of the vehicle with a battery to be swapped or install a fresh battery for the vehicle with a battery to be swapped;
disengaging the positioning member (124) from the engagement member; and
restoring the floating portion (12) during the disengagement of the positioning member (124) from the engagement member,
wherein the action of restoring the floating portion (12) is completed by the restoring mechanism (128).

## Patentansprüche

1. Rückstellmechanismus (128) für eine schwebende Batteriewechselvorrichtung, wobei die schwebende Batteriewechselvorrichtung einen feststehenden Anteil (11) und einen schwebenden Anteil (12) aufweist, und der schwebende Anteil (12) relativ zu dem feststehenden Anteil (11) schweben kann, **dadurch gekennzeichnet, dass** der Rückstellmechanismus (128) aufweist:
eine Führungshülse (1283), wobei die Führungshülse (1283) fest mit einem von dem schwebenden Anteil (12) und dem feststehenden Anteil (11) verbunden ist, und die Führungshülse (1283) einen Hohlraum und eine erste Öffnung aufweist, die sich an einem ersten Ende davon befindet;
einen Führungsstab (1284), mit einem ersten Ende des Führungsstabs (1284), das sich gleitfähig von der ersten Öffnung in den Hohlraum erstreckt, und einem zweiten Ende des Führungsstabs (1284), das an dem anderen von dem feststehenden Anteil (11) und dem schwebenden Anteil (12) anliegt; und
ein elastisches Element (1281), das in dem Hohlraum angeordnet ist, wobei ein erstes Ende des elastischen Elements (1281) mit dem ersten Ende des Führungsstabs (1284) verbunden ist;
das zweite Ende des Führungsstabs (1284) mit einem Rollelement (1287) ausgestattet ist, das relativ zu dem feststehenden Anteil (11) oder dem schwebenden Anteil (12) frei rollen kann, und wobei der Führungsstab (1284) an dem feststehenden Anteil (11) oder dem schwebenden Anteil (12) mittels des Rollelements (1287) anliegt.

2. Rückstellmechanismus für eine schwebende Batteriewechselvorrichtung nach Anspruch 1, **dadurch gekennzeichnet, dass** das Rollelement (1287) eine universelle Kugel ist, das zweite Ende des Führungsstabs (1284) mit einer Gegenbohrung ausgestattet ist, und die universelle Kugel in die Gegenbohrung eingebettet ist.

3. Rückstellmechanismus für eine schwebende Batteriewechselvorrichtung nach Anspruch 2, **dadurch gekennzeichnet, dass** die Führungshülse (1283) mit einem Montagesockel (1285) ausgestattet ist, und die Führungshülse (1283) mit dem feststehenden Anteil (11) mittels des Montagesockels (1285) fest verbunden ist.

4. Rückstellmechanismus für eine schwebende Batteriewechselvorrichtung nach Anspruch 3, **dadurch gekennzeichnet, dass** an der ersten Öffnung eine Begrenzungsstruktur bereitgestellt ist, das zweite Ende des Führungsstabs (1284) mit einer durchmesservariablen Struktur in einer Umfangsrichtung ausgestattet ist, wobei die durchmesservariable Struktur ein erstes Segment und ein zweites Segment aufweist, das erste Segment, welches so ausgestaltet ist, dass es durch die erste Öffnung hindurchgeht, einen kleineren Durchmesser als das zweite Segment hat, und ein Umfangaußenrand des zweiten Segments der durchmesservariablen Struktur einer Innenwand des Hohlraums entspricht, und die Begrenzungsstruktur so ausgestaltet ist, dass sie die Bewegung des Führungsstabs (1284) dadurch begrenzen kann, dass sie axial an dem zweiten Segment der durchmesservariablen Struktur anliegt.

5. Rückstellmechanismus für eine schwebende Batteriewechselvorrichtung nach einem der Ansprüche 1 bis 4, **dadurch gekennzeichnet, dass** der Rückstellmechanismus (128) des Weiteren ein Einstellelement (1282) aufweist, und das Einstellelement (1282) ausgestaltet ist, um eine Vorspannkraft des elastischen Elements (1281) einstellen zu können.

6. Rückstellmechanismus für eine schwebende Batteriewechselvorrichtung nach Anspruch 5, **dadurch gekennzeichnet, dass** das Einstellelement (1282) eine Einstellschraube und einen Pressblock (1286) aufweist, ein zweites Ende der Führungshülse (1283) des Weiteren mit einer zweiten Öffnung ausgestattet ist, der Pressblock (1286) an einem zweiten Ende des elastischen Elements (1281) anliegt, und ein Bolzenende der Einstellschraube aufeinander folgend an die zweite Öffnung und den Pressblock (1286) geschraubt ist.

7. Rückstellmechanismus für eine schwebende Batteriewechselvorrichtung nach Anspruch 1, **dadurch gekennzeichnet, dass** das elastische Element (1281) eine Kompressionsfeder, eine Belleville-Feder oder ein elastischer Gummiblock ist.

8. Schwebende Batteriewechselvorrichtung, die einen feststehenden Anteil (11) und einen schwebenden Anteil (12) aufweist, wobei der schwebende Anteil (12) relativ zu dem feststehenden Anteil (11) schweben kann, der schwebende Anteil (12) mit mindestens einem Positionierelement (124) ausgestattet ist, und das Positionierelement (124) mittels eines Schwebens des schwebenden Anteils (12) an ein Eingriffelement eines Fahrzeugs mit einer zu wechselnden Batterie andocken kann;
**dadurch gekennzeichnet, dass** die schwebende Batteriewechselvorrichtung des Weiteren einen Rückstellmechanismus aufweist, der verwendet wird, um die Position des schwebenden Anteils (12) einzustellen, und der Rückstellmechanismus der Rückstellmechanismus (128) für eine schwebende Batteriewechselvorrichtung gemäß einem der Ansprüche 1 bis 7 ist.

9. Schwebende Batteriewechselvorrichtung nach Anspruch 8, **dadurch gekennzeichnet, dass** eine Vielzahl von Rückstellmechanismen (128) vorhanden ist, wobei einige von der Vielzahl der Rückstellmechanismen (128) an dem feststehenden Anteil (11) oder dem schwebenden Anteil (12) in einer ersten Richtung angeordnet sind, und die anderen von der Vielzahl der Rückstellmechanismen (128) in einer zweiten Richtung an dem feststehenden Anteil (11) oder dem schwebenden Anteil (12) angeordnet sind.

10. Schwebende Batteriewechselvorrichtung nach Anspruch 9, **dadurch gekennzeichnet, dass** der schwebende Anteil (12) eine schwebende Platte (122), die relativ zu dem feststehenden Anteil (11) schweben kann, und eine schwebende Plattform (121) aufweist, die fest mit der schwebenden Platte (122) verbunden ist, wobei eine Führungshülse (1283) des Rückstellmechanismus (128) fest mit dem feststehenden Anteil (11) verbunden ist, und ein Führungsstab (1284) des Rückstellmechanismus (128) an der schwebenden Platte (122) anliegt.

11. Batteriewechselverfahren unter Verwendung der schwebenden Batteriewechselvorrichtung nach einem der Ansprüche 8 bis 10 zum Batteriewechsel, **dadurch gekennzeichnet, dass** das Batteriewechselverfahren aufweist:
Andocken des Positionierelements (124) an ein Eingriffelement eines Fahrzeugs mit einer zu wechselnden Batterie;
Schwebenlassen des schwebenden Anteils (12) während des Andockens zwischen dem Positionierelement (124) und dem Eingriffelement;
Ermöglichen, dass der schwebende Anteil (12) eine gebrauchte Batterie des Fahrzeugs mit einer zu wechselnden Batterie entfernt oder eine frische Batterie für das Fahrzeug mit einer zu wechselnden Batterie installiert;
Lösen des Eingriffs des Positionierelements (124) mit dem Eingriffelement; und
Rückstellen des schwebenden Anteils (12) während des Lösens des Eingriffs zwischen dem Positionierelement (124) und dem Eingriffelement;
wobei die Aktion des Rückstellens des schwebenden Anteils (12) durch den Rückstellmechanismus (128) abgeschlossen wird.

## Revendications

1. Mécanisme de rétablissement (128) pour un dispositif d'échange de batterie flottant, le dispositif d'échange de batterie flottant comprenant une portion fixe (11) et une portion flottante (12), et la portion flottante (12) pouvant flotter relativement à la portion fixe (11), **caractérisé en ce que** le mécanisme de rétablissement (128) comprend :
un manchon de guidage (1283), le manchon de guidage (1283) étant raccordé de manière fixe à une portion parmi la portion flottante (12) et la portion fixe (11), et le manchon de guidage (1283) ayant une cavité et une première ouverture située au niveau d'une première extrémité de celui-ci ;
une tige de guidage (1284), avec une première extrémité de la tige de guidage (1284) s'étendant de manière à pouvoir coulisser jusque dans la cavité à partir de la première ouverture, et une deuxième extrémité de la tige de guidage (1284) venant en butée contre l'autre portion parmi la portion fixe (11) et la portion flottante (12) ; et
un élément élastique (1281) agencé dans la cavité, avec une première extrémité de l'élément élastique (1281) raccordée à la première extrémité de la tige de guidage (1284) ;
la deuxième extrémité de la tige de guidage (1284) est pourvue d'un élément de roulement (1287) qui peut rouler librement relativement à la portion fixe (11) ou à la portion flottante (12), et la tige de guidage (1284) vient en butée contre la portion fixe (11) ou la portion flottante (12) par le biais de l'élément de roulement (1287) .

2. Mécanisme de rétablissement pour un dispositif d'échange de batterie flottant selon la revendication 1, **caractérisé en ce que** l'élément de roulement (1287) est une bille universelle, la deuxième extrémité de la tige de guidage (1284) est pourvue d'un lamage, et la bille universelle est incorporée dans le lamage.

3. Mécanisme de rétablissement pour un dispositif d'échange de batterie flottant selon la revendication 2, **caractérisé en ce que** le manchon de guidage (1283) est pourvu d'une base de montage (1285), et le manchon de guidage (1283) est raccordé de manière fixe à la portion fixe (11) par le biais de la base de montage (1285).

4. Mécanisme de rétablissement pour un dispositif d'échange de batterie flottant selon la revendication 3, **caractérisé en ce qu'**une structure de limitation est prévue au niveau de la première ouverture, la deuxième extrémité de la tige de guidage (1284) est pourvue d'une structure à diamètre variable dans une direction circonférentielle,
la structure à diamètre variable comprenant une première section et une deuxième section,
la première section qui est configurée pour traverser la première ouverture ayant un diamètre plus petit que la deuxième section, et
un bord externe circonférentiel de la deuxième section de la structure à diamètre variable correspond à une paroi interne de la cavité, et la structure de limitation est conçue pour pouvoir limiter le déplacement de la tige de guidage (1284) par le biais d'une butée axiale contre la deuxième section de structure à diamètre variable.

5. Mécanisme de rétablissement pour un dispositif d'échange de batterie flottant selon l'une quelconque des revendications 1 à 4, **caractérisé en ce que** le mécanisme de rétablissement (128) comprend en outre un élément de réglage (1282), et l'élément de réglage (1282) est configuré pour pouvoir régler une force de prétension de l'élément élastique (1281).

6. Mécanisme de rétablissement pour un dispositif d'échange de batterie flottant selon la revendication 5, **caractérisé en ce que** l'élément de réglage (1282) comprend un boulon de réglage et un bloc de pression (1286), une deuxième extrémité du manchon de guidage (1283) est en outre pourvue d'une deuxième ouverture, le bloc de pression (1286) vient en butée contre une deuxième extrémité de l'élément élastique (1281), et une extrémité de goujon du boulon de réglage est vissée séquentiellement à la deuxième ouverture et au bloc de pression (1286).

7. Mécanisme de rétablissement pour un dispositif d'échange de batterie flottant selon la revendication 1, **caractérisé en ce que** l'élément élastique (1281) est un ressort de compression, un ressort Belleville, ou un bloc de caoutchouc élastique.

8. Dispositif d'échange de batterie flottant, comprenant une portion fixe (11) et une portion flottante (12), la portion flottante (12) pouvant flotter relativement à la portion fixe (11), la portion flottante (12) étant pourvue d'au moins un élément de positionnement (124), et l'élément de positionnement (124) pouvant s'arrimer à un élément de mise en prise d'un véhicule avec une batterie à échanger par le biais d'un flottement de la portion flottante (12) ;
**caractérisé en ce que** le dispositif d'échange de batterie flottant comprend en outre un mécanisme de rétablissement utilisé pour régler la position de la portion flottante (12), et le mécanisme de rétablissement est le mécanisme de rétablissement (128) pour un dispositif d'échange de batterie flottant selon l'une quelconque des revendications 1 à 7.

9. Dispositif d'échange de batterie flottant selon la revendication 8, **caractérisé en ce qu'**il y a une pluralité de mécanismes de rétablissement (128), certains mécanismes de la pluralité de mécanismes de rétablissement (128) étant agencés au niveau de la portion fixe (11) ou de la portion flottante (12) dans une première direction, et les autres mécanismes de la pluralité de mécanismes de rétablissement (128) étant agencés au niveau de la portion fixe (11) ou de la portion flottante (12) dans une deuxième direction.

10. Dispositif d'échange de batterie flottant selon la revendication 9, **caractérisé en ce que** la portion flottante (12) comprend une plaque flottante (122) qui peut flotter relativement à la portion fixe (11) et une plateforme flottante (121) qui est raccordée de manière fixe à la plaque flottante (122), un manchon de guidage (1283) du mécanisme de rétablissement (128) est raccordé de manière fixe à la portion fixe (11), et une tige de guidage (1284) du mécanisme de rétablissement (128) vient en butée contre la plaque flottante (122).

11. Procédé d'échange de batterie utilisant le dispositif d'échange de batterie flottant selon l'une quelconque des revendications 8 à 10 pour un échange de batterie, **caractérisé en ce que** le procédé d'échange de batterie comprend :
l'arrimage de l'élément de positionnement (124) à un élément de mise en prise d'un véhicule avec une batterie à échanger ;
le fait de faire flotter la portion flottante (12) pendant l'arrimage entre l'élément de positionnement (124) et l'élément de mise en prise ;
le fait de permettre à la portion flottante (12) de retirer une batterie usagée du véhicule avec une batterie à échanger ou d'installer une batterie neuve pour le véhicule avec une batterie à échanger ;
le fait de dégager l'élément de positionnement (124) de l'élément de mise en prise ; et
le fait de rétablir la portion flottante (12) pendant le dégagement de l'élément de positionnement (124) de l'élément de mise en prise,
l'action de rétablissement de la portion flottante (12) étant achevée par le mécanisme de rétablissement (128).
